# FASCICULE DE BREVET EUROPEEN

(11) **EP 0 441 682 B1**
(45) Date de publication et mention de la délivrance du brevet: **07.01.1993**
(21) Numéro de dépôt: 91400220.9
(22) Date de dépôt: 30.01.1991
(51) Int. Cl.: F16L 19/00

(54) **Raccord étanche perfectionné pour conduites de transport de fluides quelconques**
Abgedichtete Verbindung für fluidführende Rohrleitungen
Sealed connection for fluid conducting conduits

(30) Priorité: 05.02.1990 FR 9001303
(43) Date de publication de la demande: 14.08.1991
(73) Titulaire: SIMMONDS S.A., F-92150 Suresnes (FR)
(72) Inventeur: Chauvel, Michel, F-72000 Le Mans (FR)
(74) Mandataire: Durand, Yves Armand Louis

(56) Documents cités:
- AT-B- 104 275
- DE-A- 2 650 301
- DE-U- 1 793 181
- DE-U- 1 993 757

## Description

La présente invention a essentiellement pour objet un raccord étanche perfectionné pour conduites de transport d'un fluide quelconque et tel que par exemple du carburant pour moteur à combustion.

On connaît déjà des raccords étanches pour conduites comprenant essentiellement deux pièces à extrémités coopérantes conjugées respectiveement convexe et concave, ces deux pièces étant réunies par un manchon intérieurement fileté retenant l'une des pièces et serré par vissage sur l'autre pièce.

Dans ces raccords, le blocage après vissage et serrage du manchon était généralement assuré par un fil-frein traversant le raccord, ce qui présente des inconvénients. En effet, lorsque le raccord est sollicité par des vibrations ou autres sollicitations, le fil-frein peut se casser et devient par conséquent inopérant, de sorte que le blocage des diverses pièces composant le raccord est loin d'être parfait. C'est dire que le raccord se desserre avec toutes les conséquences fâcheuses possibles que cela entraîne, et parmi lesquelles on peut citer les risques de fuites importantes et les risques d'incendie dans le cas où les conduites raccordées assurent la circulation d'un carburant. La présente invention a pour but de pallier notamment ces inconvénients en proposant un raccord étanche perfectionné qui demeure toujours en position bloquée quelles que soient les sollicitations auxquelles il est soumis, et dont le montage demeure simple, commode et rapide.

A cet effet, l'invention a pour objet un raccord étanche perfectionné pour consuites de transport de fluides quelconques et du type comprenant deux pièces à extrémités coopérantes conjuguées respectivement convexe et concave, et réunies par un manchon intérieurement fileté retenant l'une des pièces et serré par vissage sur un filetage extérieur prévu sur l'autre pièce, caractérisé en ce que le filetage extérieur de l'autre pièce est prolongé par une partie filetée qui possède un diamètre plus grand que celui dudit filetage extérieur et qui est susceptible de coopérer avec une rondelle d'autofreinage retenue dans un chambrage formé dans le manchon, faisant suite à la partie interne filetée de ce manchon, et dont la périphérie interne présente un diamètre plus grand que celui de la partie interne filetée du manchon.

Suivant un mode de réalisation préféré, la partie filetée précitée et le filetage extérieur de l'autre pièce précitée comportent un même pas de filetage.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue en perspective d'un raccord selon l'invention en position montée et serrée.

La figure 2 est une vue en perspective éclatée de ce raccord.

La figure 3 est une vue en coupe axiale éclatée dudit raccord.

La figure 4 est une vue une coupe axiale du raccord en position montée et serrée comme sur la figure 1.

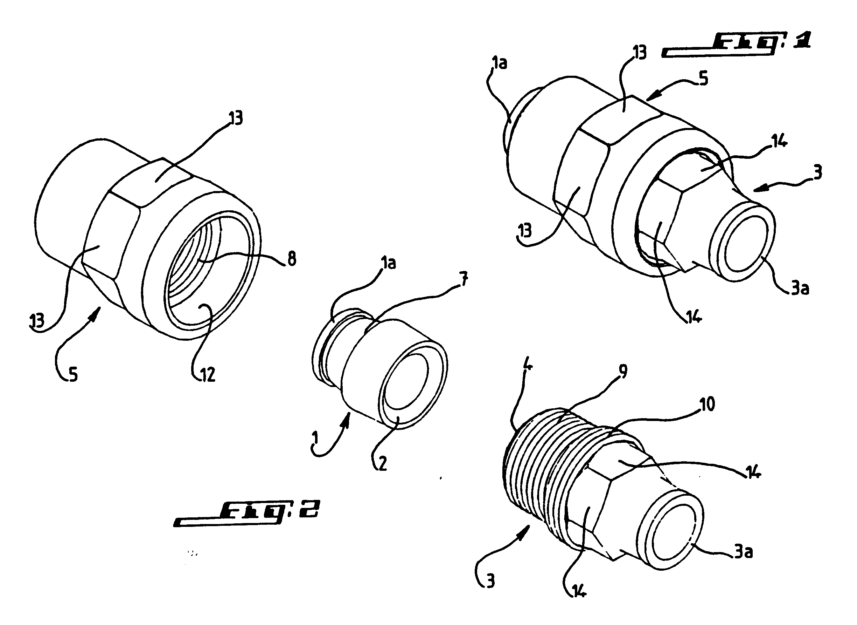

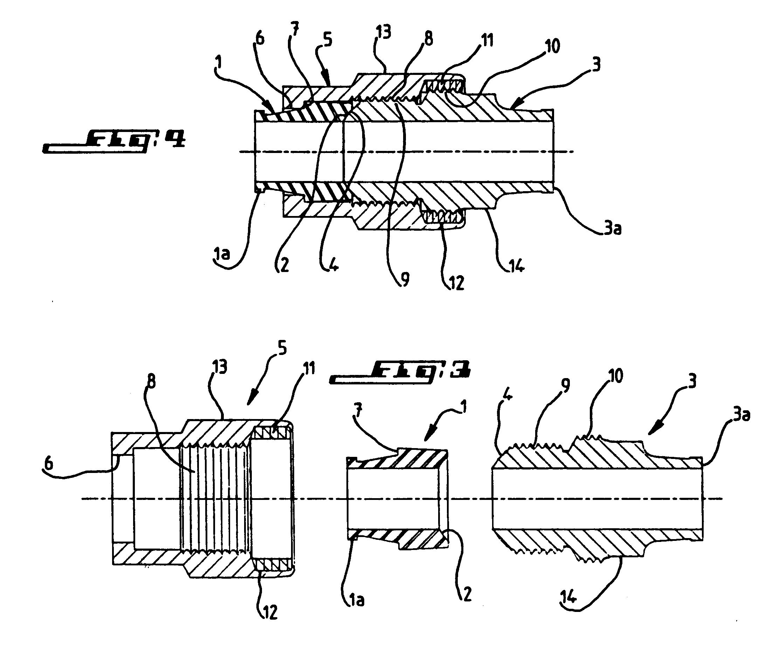

Suivant l'exemple de réalisation représenté sur les figures, un raccord étanche selon cette invention comprend essentiellement une première pièce 1 à extrémité concave 2, une deuxième pièce 3 à extrémité convexe 4 conjugée de l'extrémité concave 2 de la première pièce 1, et un manchon 5 extérieurement concentrique aux pièces 1 et 3 et permettant le serrage de ces deux pièces bout à bout et l'une contre l'autre par leurs extrémités conjuguées convexe et concave. Le manchon 5, comme on le voit bien sur les figures 3 et 4 comporte à l'une de ses extrémités, une collerette 6 susceptible de retenir la première pièce 1 qui comporte à cet effet un épaulement 7, et ce manchon comporte, sensiblement en son milieu, une partie 8 filetée intérieurement et permettant son vissage sur un filetage extérieur 9 prévu à l'extrémité de la deuxième pièce 3.

Ce filetage extérieur 9 est, conformément à l'invention, prolongé par une partie filetée 10 qui, comme on le voit bien sur les figures 3 et 4, possède un diamètre plus grand que celui dudit filetage 9, et un pas de filetage identique à celui du filetage 9.

La partie filetée supplémentaire 10 de la pièce 3 peut coopérer avec une rondelle-frein 11 réalisée en une matière synthétique appropriée telle qu'une matière comme sous la dénomination "VESPEL" ou à base de polyamide, et retenue dans un chambrage 12 formé à l'extrémité du manchon 5 opposée à l'extrémité comportant la collerette 6.

Comme on le voit bien sur les figures 3 et 4 notamment, le chambrage 12 fait suite à la partie interne filetée 8 du manchon 5, et la périphérie interne de ce chambrage présente un diamètre plus grand que celui de ladite partie interne filetée 8 dudit manchon 5.

Suivant un mode de réalisation préféré, le filetage extérieur 9 de la pièce 3 et la parie filetée 10 qui prolonge en quelque sorte ce filetage comportent nécessairement un même pas de filetage.

Le manchon 5 comporte sur sa périphérie externe, et suivant l'exemple représenté, des pans 13, par exemple six pans, permettant sa manoeuvre par une clé, de même que la pièce 3 comporte elle aussi des pans au-delà de la partie filetée 10 et repérés en 14.

Comme cela est connu en soi, les deux conduites (non représentées) à réunir par l'intermédiaire du raccord selon l'invention seront respectivement fixées par leurs extrémités et par soudage par exemple, sur respectivement l'extrémité 1a de la pièce 1 et l'extrémité 3a de la pièce 3.

Mais, pour une meilleure compréhension de l'invention, on décrira ci-après comment s'effectue le montage et le serrage du raccord qui vient d'être décrit.

La première pièce 1 étant d'abord introduite dans le manchon 5, on effectue le vissage de la pièce 3 dans le manchon 5 et cela à l'aide par exemple d'une clé engagée sur les pans 13 et/ou 14.

Après une certaine course de vissage, la partie extérieurement filetée 10 de la pièce 3 attaquera la rondelle-frein 11 préalablement logée dans le chambrage 12, et le vissage sera poursuivi jusqu'à ce que les extrémités convexe 2 et concave 4 des pièces 1 et 3 respectivement viennent en butée l'une contre l'autre comme on le voit bien sur la figure 4. Le blocage des deux pièces 1 et 3 assemblées bout à bout par le manchon 5 sera alors effectué, et ce blocage ne risquera aucunement d'être perturbé sous l'effet de sollicitations quelconques imparties au raccord, grâce à la présence de la rondelle 11 d'autofreinage entre manchon 5 et pièce 3.

Il est important de remarquer ici que grâce à la situation de la partie filetée 10 en retrait par rapport à la partie filetée 9 de la pièce 3, cette pièce 3 peut être introduite facilement et librement dans le manchon 5 pour vissage, et cette pièce 3 sera en quelque sorte guidée lors du vissage avec le manchon 5, de sorte que la partie filetée 10 viendra correctement en prise avec la rondelle-frein 11.

## Revendications

1. Raccord étanche perfectionné pour conduites de transport de fluides quelconques et du type comprenant deux pièces (1,3) à extrémités coopérantes conjuguées respectivement convexe (2) et concave (4), et réunies par un manchon (5) intérieurement fileté retenant l'une (1) des pièces et serré par vissage sur un filetage extérieur (9) prévu sur l'autre pièce (3), caractérisé en ce que le filetage extérieur (9) de l'autre pièce (3) est prolongé par une partie filetée (10) qui possède un diamètre plus grand que celui dudit filetage extérieur et qui est susceptible de coopérer avec une rondelle d'autofreinage (11) retenue dans un chambrage (12) formé dans le manchon (5), faisant suite à la partie interne filetée (8) de ce manchon, et dont le périphérie interne présente un diamètre plus grand que celui de la partie interne filetée (8) du manchon (5).

2. Raccord étanche selon la revendication 1, caractérisé en ce que la partie filetée précitée (10) et le filetage extérieur (9) de l'autre pièce (3) comportent un même pas de filetage.

## Patentansprüche

1. Verbesserte dichte Verbindung für Leitungen zur Beförderung von irgendwelchen fliessfähigen Mitteln und derjenigen Gattung mit zwei Stücken (1,3) mit zusammenwirkenden jeweils konvexen (2) und konkaven (4) Enden einander entsprechender Gestalt und die durch eine mit Innengewinde versehene Muffe (5) vereinigt sind, welche das eine (1) der Stücke zurückhält und durch Verschrauben an einem an dem anderen Stück (3) vorgesehenen Aussengewinde (9) fest angezogen wird, dadurch gekennzeichnet, dass das Aussengewinde (9) des anderen Stücks (3) durch einen Gewindeabschnitt (10) verlängert ist, der einen grösseren Durchmesser als derjenige des besagten Aussengewindes hat und der fähig ist, mit einer, in einer in der Muffe (5) gebildeten und sich an den inneren Gewindeabschnitt (8) dieser Muffe anschliessenden Einsenkung (12) zurückgehaltenen selbstbremsenden Ringscheibe (11) zusammenzuwirken und deren innere Einsenkungsumfang einen grösseren Durchmesser als derjenige des inneren Gewindeabschnitts (8) der Muffe (5) aufweist.

2. Dichte Verbindung nach Anspruch 1, dadurch gekennzeichnet, dass der vorgenannte Gewindeabschnitt (10) und das Aussengewinde (9) des anderen Stücks (3) eine gleiche Gewindesteigung aufweisen.

## Claims

1. Improved fluid-tight connector for pipelines for the conveyance of any fluids whatsoever and of the type comprising two parts (1, 3) with concave and convex complementary cooperating ends (2) and (4), respectively, and assembled by an internally threaded sleeve (5) retaining one (1) of the parts and tightened through screwing on an external threading (9) provided on the other part (3), characterized in that the external threading (9) of the other part (3) is extended by a threaded portion (10) which has a greater diameter than that of the said external threading and which is capable of co-operating with a self-braking washer (11) retained in a recessing (12) formed in the sleeve (5), following the inner threaded portion (8) of this sleeve and the inner periphery which exhibits a greater diameter than that of the inner threaded portion (8) of the sleeve (5).

2. Fluid-tight connector according to claim 1, characterized in that the aforesaid threaded portion (10) and the external threading (9) of the other part (3) comprise a same thread pitch.
